# EUROPEAN PATENT SPECIFICATION

(11) **EP 1 138 618 B1**
(45) Date of publication and mention of the grant of the patent: **18.08.2004**
(21) Application number: 01302758.6
(22) Date of filing: 26.03.2001
(51) Int. Cl.: B65G 1/04

(54) **Handhabungsanordnung für Wareneinheiten und Verfahren zur Handhabung von Wareneinheiten**
Handling arrangement for goods units and method of handling of goods units
Dispositif et procédé de manipulation d'articles

(30) Priority: 27.03.2000 FI 20000704
(43) Date of publication of application: 04.10.2001
(73) Proprietor: CIMCORP OY, SF-28400 Ulvila (FI)
(72) Inventor: Peltomäki, Tero, 28450 Vanha-Ulvila (FI)
(74) Representative: Hanson, William Bennett

(56) References cited:
- EP-A- 0 767 113
- EP-A- 0 794 135
- DE-U- 9 403 105
- US-A- 3 434 604
- US-A- 5 531 563

## Description

The present invention relates to a handling arrangement for goods units, which comprises a goods unit stock area and a goods unit loading area arranged in direct proximity to each other, and a robot system which comprises a goods unit picking robot movable in the stock area, and a transfer pile row moving system for moving transfer pile rows formed by the picking robot, in which arrangement the working area of the goods unit picking robot is arranged to reach to the stock area.

The invention also relates to a method of handling of goods units, in a goods unit stock area and a goods unit loading area, using a robot arrangement which comprises a goods unit picking robot movable in the stock area and a transfer pile row moving system for moving transfer pile rows formed by the picking robot.

From the state of the art it is known that among other things in dispatch departments of production plants of breweries, slaughterhouses, dairies, bakeries and the like shipping amounts based on customer orders are collected. In manual picking, trucks and moving carriages are used as a help, but the work is slow, because one customer order can include several products, which are arranged around the stock area, whereupon the transfers take the largest part of the time spent. In an automated picking process, each product can have its own product line, from where the products are taken according to the customer order. The picking can only happen at the ends of rows and the transport arrangement takes up excessive space. This arrangement is functionally inflexible and ties up a lot of floor area. Additionally the amount of apparatus increases greatly, causing considerable service and repair requirements.

If the dispatch department work is required to be automated, one can buy automatic arrangements, which automatically handle the picking and the transfers inside the stock area. Because the amount and volume of custom orders can be large depending of the time of day or night, one needs a large transport system for goods transfer, with which the goods are transported and arranged for the loading area. This kind of arrangement ties up a lot of floor area, preventing traffic in the area, and lengthens the working time for goods loading.

The piling and picking from piles of goods units is known e.g. from the publication FI 922028, in which there is presented an arrangement for stocking and loading of boxes and box piles. The arrangement does not make possible forming specified box piles by picking box sets from separate piles.

In a publication FI 954688 a robot system is shown, characterised in that it comprises a robot movable over the working area, wherein several goods units are arranged in a pile. The robot comprises vertically movable gripping apparatus, which can pick at least one goods unit from a pile or unload to a pile. In the arrangement, boxes formed as piles are transported by the gripping apparatus to a transport line, which moves the piles forward finally to be loaded to the distribution cars.

Another handling arrangement for goods units is known from DE 9 403 105 U.

These known arrangements concentrate mostly on picking the boxes themselves, and cannot control comprehensive handling of goods units. Problems of combined loading and distributing occurring after the picking are not solved by these known arrangements, whereas the invention offers a new solution to such problems.

The aim of the invention is to achieve a more advanced arrangement than known systems, wherein hindrances and problems of the known art are minimised, and with the help of which the handling of goods units becomes effective. Additionally a special aim is to achieve an arrangement for goods dispatch departments, with the aid of which the manual work and the time needed for loading transport means is minimised.

The aims of the invention are achieved by a handling arrangement for goods units according to claim 1 and a method of handling goods units according to claim 9. Preferred or optional features of the invention are defined by the dependent claims.

According to one feature of the invention the handling arrangement for goods units comprises the goods unit stock area and the loading area and the robot system, which further comprises the picking robot movable in the goods unit stock area, which can be for example according to the publication FI 954688. The arrangement further advantageously comprises a transport pile row moving arrangement for moving transfer pile rows formed by the picking robot, and robot system control apparatus, into which apparatus control information, customer based goods unit information and customer based unloading information concerning a load can be fed. The picking robot is preferably arranged to pick and form customer based transport piles from goods units according to the customer based information and place them in transport pile rows for transport by a combination function of the transport pile row transport apparatus. In the arrangement, the stock area and the loading area are arranged in direct proximity to each other, the working area of the goods units picking robot is arranged to reach to the stock area and the working area of the goods pile rows moving apparatus is arranged to reach both to the stock area and to the loading area, so that with the help of the moving apparatus each formed transport pile row may be able to move as a whole from the stock area to the loading area.

The transfer pile row moving system may comprise a power transmitting arrangement to achieve the transfer movement of the transfer pile rows, by means of which power is transferable to all of the transfer piles of the transfer pile row. Advantageously the moving apparatus comprises a pusher or the like, which is arranged to move with a horizontal pushing movement from the stock area to the loading area and with a returning movement from the loading area to the stock area, the transfer movement being a pushing movement. A transport pile row forming area may be arranged in the working area of the goods unit picking robot, and may also be arranged in the working area of the transport pile row transport system, if the working areas of the picking robot and the transfer pile row transport equipment overlap and the said forming area is located in the stock area side. The stock area and the loading area are advantageously separated by a wall or the like.

According to an optional feature of the method of the invention for the handling of goods units in the stock area and in the loading area for the loading of goods units to a transport vehicle, one can store, using transport apparatus, goods units coming to the stock area with the help of the robot system, in stock piles with the same articles located beside each other in the store and from which stock piles one picks, with the help of the above mentioned robot system, transport piles including different goods units. From the transport piles one may form in advance several transport pile rows having predetermined paths, which rows are further moved in the order formed by transport means to the load. According to this feature the robot system comprises in the stock area a movable goods unit picking robot, the transfer pile row transport apparatus and the control apparatus of the robot system, which controls the function of the robot system. For control data, customised goods unit information and customised load discharge information in dropping, i.e. distribution, order may be fed to the robot system's controlling apparatus. In this way, one can discharge to each customer exactly his ordered goods in the correct order from the total load. According to this information the picking robot may pick and form customised transfer piles and deposit them to transfer pile rows in operational connection with the transfer pile row moving apparatus. The transfer pile row moving apparatus may also form transfer assemblies from sequential transfer pile rows, which are arranged according to the load discharge information.

Transport assemblies may be formed such that the transport pile row transfer equipment moves the transport pile row already formed by the picking robot forward towards the loading area at least so far that as to leave enough space for the next formed transport pile row.

Several advantages are achieved by the invention. The arrangement according to the invention is able to solve the picking problem of many foodstuff dispatch departments without any manual operating stages whatsoever. A stream of goods coming from production arrives automatically at the loading bridge directly in the correct loading form and loading order. The loading phase speeds up considerably and the possibilities of a mistake decrease, because separate transmittal is not needed to provide information to a car loader, as to how he should carry out the loading of the car.

The invention also has clear advantages compared to existing automatic systems, where the article can be loaded in the picking area e.g. in a route specific order to the conveyor. Therein the conveyor arrangement has to be extended as far as the loading area, in order to ensure faultless loading to the means of transport. This arrangement requires among other things a lot of floor space, because the amount of apparatus is large and hinders or even prevents the movement of people and machines in the loading area.

The invention will now be described in more detail, by way of example only, with reference to the attached drawings, in which:
- Fig. 1 is a plan of a handling arrangement according to an embodiment of the invention;
- Fig. 2 is a side view of the handling arrangement of figure 1; and
- Fig. 3 is a perspective view of the handling arrangement of figure 1.

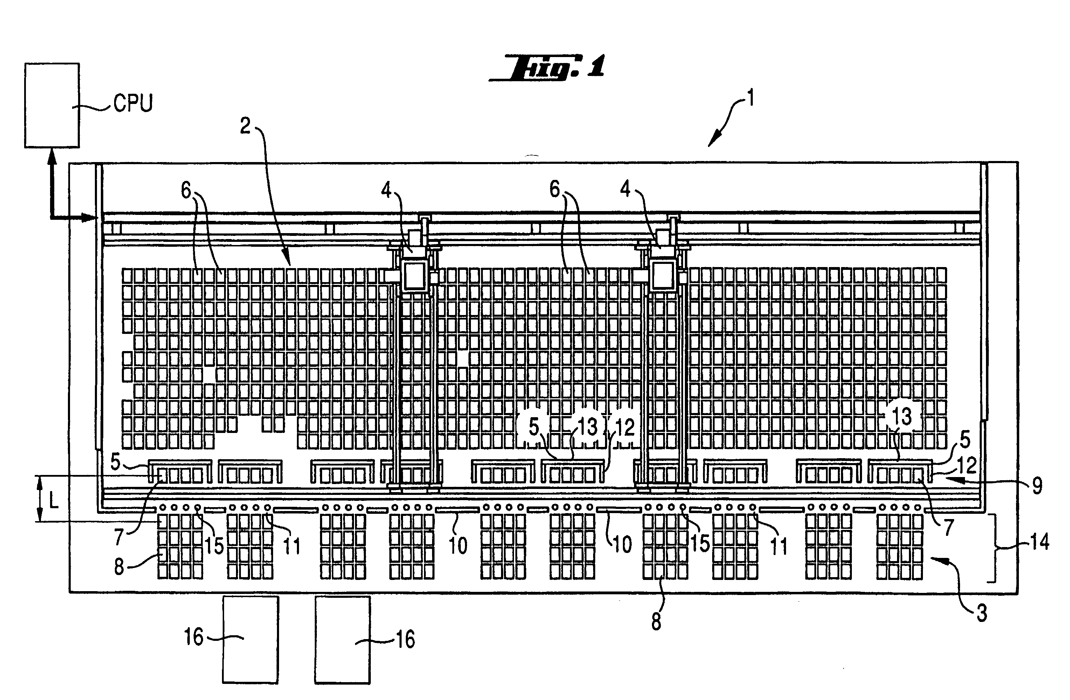

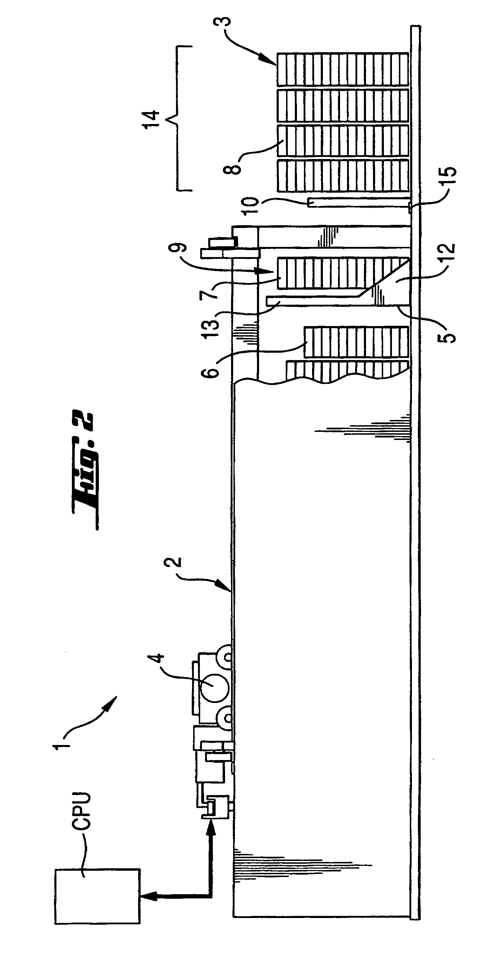

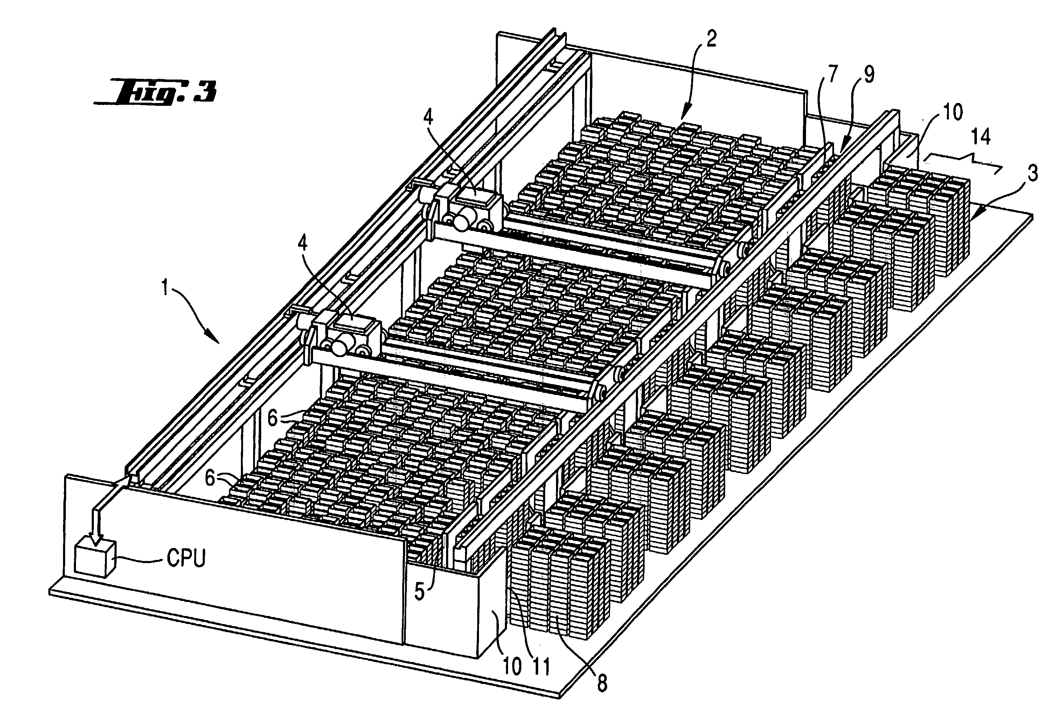

Figures 1-3 show by way of example a handling arrangement for goods units 1, which generally comprises a stock area 2, a loading area 3 and a robot arrangement, which comprises a goods unit picking robot 4 movable in the stock area, transport pile row transfer equipment 5, for moving transfer pile rows formed by the picking robot 4, and a robot system controlling system (not shown). The robot system controlling system is able to feed as control information, among other things, customer unit information and customer discharge information, whereupon the picking robot 4 is arranged to pick and form piles 7 for a customer on account of this information.

The picking robot 4 is advantageously of the type comprising a clawing gripping device for picking units from a pile and/or discharging units to a pile from above, and a vertically movable tower-like frame, which has a load space open from above. Above the load space, a substantial number of goods units mounted one upon the other fits in the grasp of the lower robot. In this way it is possible that through guiding the movements of the gripping device in the vertical direction one can pick from a goods pile and/or unload to a goods pile one or more goods units such that the order of the goods units is according to the controlling data of the robot system's controlling system.

In the arrangement according to the invention the goods unit can be for example a plastic box, in which wanted articles, such as bakery products are placed. In the arrangement the goods unit picking robot 4 also attends to the receiving of plastic box piles coming from production and storage in the stock area 2, to which area the working area of the picking robot 4 is adjusted to reach. In the stock area goods units incoming via a separate conveyor apparatus (not shown) are stored with the help of the robot system in adjacent product piles containing the same kind of products. In the product piles 6 situated in the stock area 2 the robot performs, controlled by the control system CPU, customised picking, moving from one pile to another pile and picking the needed amount of boxes from each pile 6, picking them with the help of the grasping apparatus of the picking robot 4, in customised transfer piles 7, which can then consist of several different goods units. For example in the bakery embodiment one transfer pile may contain 17 boxes (=goods units) and each box can contain different bread.

Next the picking robot 4 moves the transfer pile 7 and puts it in operative connection with the transfer pile rows of the moving system, in the transfer pile row forming area 9 located in the stock area. After this the picking robot carries out a new picking operation and locates the new transfer pile 7 beside the previous transfer pile 7, thus forming transfer pile rows 8. When an entire transfer pile row 8 is formed, the transfer pile row moving system 5 moves the entire transfer pile row 8 in one operation with a transfer movement L forward from the stock area 2 to the loading area 3. The transfer movement L moves the row forward at least far enough to leave space for the next formed transfer pile row.

The transfer pile row moving system is returned with a returning movement to its starting point and the picking robot 4 can begin once again to form a new transfer pile row. After having been formed, the new transfer pile row 7 pushes with the transfer movement of the transfer pile row moving system the previous transfer pile row 7 ahead. This step is repeated until transfer entities 14 are formed, in which, as far as the content of the load is concerned, all piles are correct, in the channel specific distribution order. The transfer entity can be now moved for example to the distribution car 16.

The working area of the moving system 5 is arranged to reach both the stock area 1 and the loading area 3, and the stock area and the loading area are arranged immediately proximate each other. Advantageously the stock area 2 and the loading area 3 are separated by a wall 10 or the like, in which holes 11 are arranged at the locations of the transfer pile row moving system 5. With this arrangement, safety is increased, because in the working area of the robot the arrangement cannot admit people during operation. The wall can also be for example a fence, in which case the visibility between the areas remains, but if desired one can also use a fixed wall.

The transfer pile row moving apparatus 5 advantageously comprises a pusher or the like, which comprises an essentially vertical pushing wall 12 in comparison with its direction of movement and the direction of movement of side walls 13 at both ends of the pushing wall. The pusher is arranged to move, in an essentially horizontally pushing movement, the transfer pile row 8 at its appointed time from the stock area to the loading area. The pushing wall is advantageously the height of the hole 11 and/or the planned highest formed pile and essentially the width of the hole 11. With this arrangement, both the operational safety and reliability can be maximised.

When the transfer pile row forming area 9 is empty, the transfer pile row moving apparatus is arranged to act also as a barrier preventing motion through the said openings and when the first transfer pile row is already formed, no special barrier is needed, because the transfer pile row acts as such a barrier.

According to one embodiment of the invention a transfer pile row forming area controlling arrangement 15, connected to data transfer controlling apparatus, also belongs to the robot system. This arrangement 15 is arranged in connection with the transfer pile row forming area 9. The movement of the possible target, for example a person, in the forming area is registered with the forming area controlling arrangement 15 and appropriate information is sent to the robot system controlling apparatus. The forming area controlling arrangement 15 can be for example a light curtain or other optical arrangement. This kind of arrangement is arranged advantageously separately for each forming area, so that one is able for example to interrupt the movement of transfer piles 8 only in those areas where the controlling arrangement has noticed movement.

The invention is not limited to the embodiments and numerical values shown but several modifications of the invention are reasonable within the scope of the attached claims.

## Claims

1. A handling arrangement for goods units, which comprises a goods unit stock area (2) and a goods unit loading area (3) arranged in direct proximity to each other, and a robot system, which comprises a goods unit picking robot (4) movable in the stock area, and a transfer pile row moving system (5), for moving transfer pile rows (8) formed by the picking robot (4), in which arrangement the working area of the goods unit picking robot (4) is arranged to reach to the stock area (2), **characterised in that** the working area of the transfer pile row moving system (5) is arranged to reach both to the goods unit stock area (2) and to the goods unit loading area (3).

2. A handling arrangement for goods units according to claim 1, **characterised in that** the robot system is arranged to be controlled by a controlling apparatus (CPU), to which apparatus at least customised goods unit information and customised load discharge information can be fed as control data, and the picking robot (4) is arranged to pick and form customised transfer piles (7) according to this information and deposit them to transfer pile rows (8) in operational connection with the transfer pile row moving system (5).

3. A handling arrangement for goods units according to claim 1 or 2, **characterised in that** the transfer pile row moving system (5) comprises a power transmitting arrangement for achieving the transfer movement of the transfer pile rows, with which arrangement power is transferable to all of the transfer piles of a transfer pile row.

4. A handling arrangement for goods units according to claim 3, **characterised in that** the transfer pile row moving system (5) comprises a pusher or the like, which is arranged to move, with an essentially horizontal pushing movement, at least one transfer pile row in one operation from the stock area (2) to the loading area (3), and **in that** in the working area of the goods unit picking robot (4) a transfer pile row forming area (9) is arranged, which is also situated in the working area of the transfer pile row moving system (5).

5. A handling arrangement for goods units according to claim 4, **characterised in that** the stock area (2) and the loading area (3) are separated from each other by a wall (10) or the like, in which openings (11) are arranged at each location of the transfer pile row moving system (5), and the transfer pile row moving system is arranged to also act as barriers to movement through said openings.

6. A handling arrangement for goods units according to claim 5, **characterised in that** the transfer pile row forming area (9) is situated separating the stock area (2) and the loading area wall (10) or the like on the side of the stock area (2), and the pusher comprises an essentially vertical pushing wall (12) relative to its direction of movement and the direction of movement of side walls (13) at both ends of the pushing wall.

7. A handling arrangement for goods units according to claim 2 or any claim dependent thereupon, **characterised in that** the transfer pile row moving system (5) is arranged to move a transfer pile row (8), already formed by the picking robot (4), forward towards the loading area (3) at least far enough to leave space for the next formed transfer pile row, and the transfer pile row moving system (5) is arranged to form from transfer pile row transfer entities (14), which are arranged according to the load discharge information controlled by the controlling apparatus (CPU) of the robot system.

8. A handling arrangement for goods units according to claim 2 or any claim dependent thereupon, **characterised in that** a transfer pile row forming area controlling arrangement (15), connected to data transfer controlling apparatus, also belongs to the robot system, which controlling arrangement (15) is arranged proximate the transfer pile row forming area (9) to register the movement of a possible target to said area and send information concerning such movement to the controlling apparatus (CPU) of the robot system.

9. A method of handling of goods units, in a goods unit stock area (2) and a goods unit loading area (3), using a robot arrangement which comprises a goods unit picking robot (4) movable in the stock area (2) and a transfer pile row moving system (5), for moving transfer pile rows formed by the picking robot, **characterised in that** the picking robot (4) picks and forms customised transfer piles (7) and locates them in transfer pile rows (8) in operational connection with the transfer pile row moving system (5), and the transfer pile row moving system moves each formed transfer pile row (8) forward, thus forming transfer entities (14) each formed by several transfer pile rows.

10. A method of handling of goods units according to claim 9, **characterised in that** the robot arrangement has a controlling system (CPU) including at least customer orientated goods unit information and load discharge information, the picking robot (4) places customer orientated transfer piles (7) in transfer pile rows (8) in the stock area (2) and the transfer pile row moving system (5) moves each formed transfer pile row (8) from the stock area (2) to the loading area (3), thus forming, from several transfer pile rows, transfer entities (14) in the loading area.

11. A method of handling of goods units according to claim 10, **characterised in that** the transport pile row moving system (5) moves the transport pile row (8) already formed by the picking robot (4) forward towards the loading area (3) at least far enough to leave space for the next formed transfer pile row (8).

12. A method of handling of goods units according to claim 10, **characterised in that** a transfer pile row forming area controlling arrangement (15), connected to data transfer controlling apparatus, also belongs to the robot system, which controlling arrangement (15) is arranged proximate a transport pile row forming area (9), and which registers a possible target's movement to said area and sends information concerning such movement to the controlling system (CPU) of the robot arrangement.

## Patentansprüche

1. Güterumschlagsanordnung für Gütereinheiten, welche einen Lagerbereich (2) für Gütereinheiten und einen Ladebereich (3) für Gütereinheiten in direkter Nähe zueinander und ein Robotersystem umfasst, welches einen in dem Lagerbereich bewegbaren Aufnahmeroboter (4) für Gütereinheiten umfasst, und ein Bewegungssystem (5) für Transferstapelreihen, um durch den Aufnahmeroboter (4) gebildete Transferstapelreihen (8) zu bewegen, in welcher Anordnung der Arbeitsbereich des Aufnahmeroboter (4) für Gütereinheiten eingerichtet ist, um bis zu dem Lagerbereich (2) zu reichen,
**dadurch gekennzeichnet, dass** der Arbeitsbereich des Bewegungssystems (5) für die Transferstapelreihen eingerichtet ist, um sowohl den Lagerbereich (2) für Gütereinheiten als auch den Ladebereich (3) für Gütereinheiten zu erreichen.

2. Güterumschlagsanordnung für Gütereinheiten nach Anspruch 1,
**dadurch gekennzeichnet, dass** das Robotersystem eingerichtet ist, um durch eine Steuerungsvorrichtung (CPU) gesteuert zu werden, welcher Vorrichtung zumindest spezielle Gütereinheits-Informationen und spezielle Ladungsablageinformationen als Steuerungsdaten zugeführt werden können, und der Aufnahmeroboter (4) ist eingerichtet, um, entsprechend dieser Informationen, speziell angefertigte Transferstapel (7) aufzunehmen und zu bilden und sie an Transferstapelreihen (8) abzulegen, welche in funktionaler Verbindung mit der Bewegungsvorrichtung (5) für die Transferstapelreihen stehen.

3. Güterumschlagsanordnung für Gütereinheiten nach Anspruch 1 oder 2,
**dadurch gekennzeichnet, dass** das Bewegungssystem (5) für die Transferstapelreihe eine kraftübertragende Anordnung umfasst, um die Transferbewegung der Transferstapelreihen zu erreichen, mittels welcher Anordnung Kraft zu allen Transferstapeln einer Transferstapelreihe übertragbar ist.

4. Güterumschlagsanordnung für Gütereinheiten nach Anspruch 3,
**dadurch gekennzeichnet, dass** das Bewegungssystem (5) für die Transferstapelreihe einen Schieber oder ähnliches umfasst, welcher eingerichtet ist, um mit einer im Wesentlichen horizontalen schiebenden Bewegung wenigstens eine Transferstapelreihe in einem Vorgang von dem Lagerbereich (2) zu dem Ladebereich (3) zu bewegen, und dass in dem Arbeitsbereich des Aufnahmeroboter (4) für Gütereinheiten ein Bereich (9) zum Bilden der Transferstapelreihen eingerichtet ist, welcher ebenfalls in dem Arbeitsbereich des Bewegungssystems (5) für die Transferstapelreihe angeordnet ist.

5. Güterumschlagsanordnung für Gütereinheiten nach Anspruch 4,
**dadurch gekennzeichnet, dass** der Lagerbereich (2) und der Ladebereich (3) durch eine Wand (10) oder ähnliches voneinander getrennt sind, in welcher an jeder Stelle des Bewegungssystems (5) für die Transferstapelreihen Löcher (11) eingerichtet sind, und das Bewegungssystem (5) für die Transferstapelreihen ist eingerichtet, um als eine Barriere für Bewegung durch diese Öffnungen zu dienen.

6. Güterumschlagsanordnung für Gütereinheiten nach Anspruch 5,
**dadurch gekennzeichnet, dass** der Bereich (9) zum Bilden der Transferstapelreihen angeordnet ist, um den Lagerbereich (2) und die Ladebereichswand (10) oder ähnliches an der Seite des Lagerbereichs (2) zu trennen, und der Schieber umfasst eine Schubwand (12), welche relativ zu ihrer Bewegungsrichtung und der Bewegungsrichtung von Seitenwänden (13) an beiden Enden der Schubwand im Wesentlichen vertikal ist.

7. Güterumschlagsanordnung für Gütereinheiten nach Anspruch 2 oder jedem davon abhängigen Anspruch,
**dadurch gekennzeichnet, dass** das Bewegungssystem (5) für die Transferstapelreihe eingerichtet ist, um eine Transferstapelreihe (8), welche schon durch den Aufnahmeroboter (4) gebildet wurde, wenigstens weit genug nach vorne zu dem Ladebereich (3) zu bewegen, um Raum für die nächste gebildete Transferstapelreihe zu lassen, und das Bewegungssystem (5) für die Transferstapelreihe ist eingerichtet, um von Transferstapelreihen Transfereinheiten (14) zu bilden, welche entsprechend der Entladungsinformationen angeordnet sind, welche durch die Steuerungsvorrichtung (CPU) des Robotersystems gesteuert sind.

8. Güterumschlagsanordnung für Gütereinheiten nach Anspruch 2 oder jedem davon abhängigen Anspruch,
**dadurch gekennzeichnet, dass** auch eine Steuerungsanordnung (15) für den Bereich zur Bildung der Transferstapelreihen, welche mit der Steuerungsvorrichtung für die Datenübertragung verbunden ist, zu dem Robotersystem gehört, welche Steuerungsanordnung (15) in der Nähe des Bereichs (9) zur Bildung der Transferstapelreihen angeordnet ist, um die Bewegung eines möglichen Ziels zu diesem Bereich zu registrieren und Informationen, welche derartige Bewegungen betreffen, zu der Steuerungsvorrichtung (CPU) des Robotersystem zu senden.

9. Verfahren zum Güterumschlag von Gütereinheiten, in einem Lagerbereich (2) für Gütereinheiten und einem Ladebereich (3) für Gütereinheiten, welche eine Roboteranordnung verwendet, welche einen in dem Lagerbereich (2) bewegbaren Aufnahmeroboter (4) für Gütereinheiten umfasst, und ein Bewegungssystem (5) für Transferstapelreihen, um durch den Aufnahmeroboter (4) gebildete Transferstapelreihen zu bewegen,
**dadurch gekennzeichnet, dass** der Aufnahmeroboter (4) speziell angefertigte Transferstapel (7) aufnimmt und bildet und sie in Transferstapelreihen (8) anordnet, welche in funktionaler Verbindung mit dem Bewegungssystem (5) für die Transferstapelreihen sind, und das Bewegungssystem (5) für die Transferstapelreihe bewegt jede gebildete Transferstapelreihe (8) vorwärts, und bildet somit Transfereinheiten (14), welche jeweils aus mehreren Transferstapelreihen gebildet werden.

10. Verfahren zum Güterumschlag von Gütereinheiten nach Anspruch 9,
**dadurch gekennzeichnet, dass** die Roboteranordnung ein Steuerungssystem (CPU) hat, welches wenigstens kundenorientierte Gütereinheits-Informationen und Ladungsablage-Informationen enthält, wobei der Aufnahmeroboter (4) kundenorientierte Transferstapel (7) in Transferstapelreihen (8) in dem Lagerbereich (2) platziert und das Bewegungssystem (5) für die Transferstapelreihen jede gebildete Transferstapelreihe (8) von dem Lagerbereich (2) zu dem Ladebereich (3) bewegt, und somit, aus mehreren Transferstapelreihen, Transfereinheiten (14) in dem Ladebereich bildet.

11. Verfahren zum Güterumschlag von Gütereinheiten nach Anspruch 10,
**dadurch gekennzeichnet, dass** das Bewegungssystem (5) für die Transferstapelreihen die schon von dem Aufnahmeroboter (4) gebildete Transportstapelreihe (8) wenigstens weit genug nach vorne zu dem Ladebereich (3) bewegt, um Raum für die nächste gebildete Transferstapelreihe (8) zu schaffen.

12. Verfahren zum Güterumschlag von Gütereinheiten nach Anspruch 10,
**dadurch gekennzeichnet, dass** auch eine Steuerungsanordnung (15) für den Bereich zur Bildung der Transferstapelreihen, welche mit der Steuerungsvorrichtung für die Datenübertragung verbunden ist, zu dem Robotersystem gehört, welche Steuerungsanordnung (15) in der Nähe eines Bereichs (9) zur Bildung der Transportstapelreihen angeordnet ist, und welche die Bewegung eines möglichen Ziels zu diesem Bereich registriert und Informationen, welche derartige Bewegungen betreffen, zu der Steuerungsvorrichtung (CPU) des Robotersystem sendet.

## Revendications

1. Agencement de manutention pour unités de marchandises, comprenant une zone d'entreposage (2) d'unités de marchandises et une zone de chargement (3) d'unités de marchandises agencées à proximité directe l'une de l'autre, et un système robot, lequel comprend un robot preneur (4) d'unités de marchandises mobile dans la zone d'entreposage, et un système (5) de déplacement de rangées de piles de transfert, pour déplacer des rangées (8) de piles de transfert formées par le robot preneur (4), agencement dans lequel la zone de travail du robot preneur (4) d'unités de marchandises est agencée de façon à atteindre la zone d'entreposage (2), **caractérisé en ce que** la zone de travail du système (5) de déplacement de rangées de piles de transfert est agencée de façon à atteindre la zone d'entreposage (2) d'unités de marchandises et la zone de chargement (3) d'unités de marchandises.

2. Agencement de manutention pour unités de marchandises selon la revendication 1, **caractérisé en ce que** le système robot est agencé pour être commandé par un appareil de commande (CPU), appareil auquel au moins des informations personnalisées concernant les unités de marchandises et des informations personnalisées concernant la décharge du chargement peuvent être appliquées sous forme de données de commande, et le robot preneur (4) est agencé pour prendre et former des piles de transfert (7) en fonction de ces informations et pour les déposer en rangées (8) de piles de transfert en connexion opérationnelle avec le système (5) de déplacement de rangées de piles de transfert.

3. Agencement de manutention pour unités de marchandises selon la revendication 1 ou 2, **caractérisé en ce que** le système (5) de déplacement de rangées de piles de transfert comprend un agencement de transmission d'énergie pour réaliser le mouvement de transfert des rangées de piles de transfert, agencement grâce auquel de l'énergie peut être transférée à toutes les piles de transfert d'une rangée de piles de transfert.

4. Agencement de manutention pour unités de marchandises selon la revendication 3, **caractérisé en ce que** le système (5) de déplacement de rangées de piles de transfert comprend un dispositif pousseur ou un dispositif assimilé, lequel est agencé pour déplacer, selon un mouvement de poussée essentiellement horizontal, au moins une rangée de piles de transfert en une opération entre la zone d'entreposage (2) et la zone de chargement (3), et **en ce que**, dans la zone de travail du robot preneur (4) d'unités de marchandises, est agencée une zone de formation (9) de rangées de piles de transfert, laquelle est également située dans la zone de travail du système (5) de déplacement de rangées de piles de transfert.

5. Agencement de manutention pour unités de marchandises selon la revendication 4, **caractérisé en ce que** la zone d'entreposage (2) et la zone de chargement (3) sont séparées l'une de l'autre par une paroi (10) ou un dispositif similaire, dans laquelle des ouvertures (11) sont agencées à chaque position du système (5) de déplacement de rangées de piles de transfert, et le système de déplacement de rangées de piles de transfert est agencé pour faire également fonction de barrière au mouvement à travers lesdites ouvertures.

6. Agencement de manutention pour unités de marchandises selon la revendication 5, **caractérisé en ce que** la zone de formation (9) de rangées de piles de transfert est située à la séparation de la zone d'entreposage (2) et de la paroi (10) ou du dispositif similaire de la zone de chargement, du côté de la zone d'entreposage (2), et le dispositif de poussée comprend une paroi de poussée (12) essentiellement verticale par rapport à sa direction de mouvement et à la direction de mouvement de parois latérales (13) aux deux extrémités de la paroi de poussée.

7. Agencement de manutention pour unités de marchandises selon la revendication 2 ou toute revendication dépendant de celle-ci, **caractérisé en ce que** le système (5) de déplacement de rangées de piles de transfert est agencé pour déplacer une rangée (8) de piles de transfert, déjà formée par le robot preneur (4), vers l'avant en direction de la zone de chargement (3) au moins suffisamment loin pour laisser de l'espace pour la rangée de piles de transfert formée suivante, et le système (5) de déplacement de rangées de piles de transfert est agencé pour former des entités de transfert (14) de rangées de piles de transfert, lesquelles sont agencées en fonction des informations concernant la décharge du chargement commandées par l'appareil de commande (CPU) du système robot.

8. Agencement de manutention pour unités de marchandises selon la revendication 2 ou toute revendication dépendant de celle-ci, **caractérisé en ce qu'**un agencement de commande (15) de la zone de formation de rangées de piles de transfert, connecté à l'appareil de commande de transfert de données, appartient également au système robot, lequel agencement de commande (15) est agencé à proximité de la zone de formation (9) de rangées de piles de transfert pour enregistrer le mouvement d'une cible possible vers ladite zone et envoyer des informations concernant ce mouvement à l'appareil de commande (CPU) du système robot.

9. Procédé de manutention d'unités de marchandises, dans une zone d'entreposage (2) d'unités de marchandises et une zone de chargement (3) d'unités de marchandises, à l'aide d'un agencement de robot qui comprend un robot preneur (4) d'unités de marchandises mobile dans la zone d'entreposage (2) et un système (5) de déplacement de rangées de piles de transfert pour déplacer des rangées de piles de transfert formées par le robot preneur, **caractérisé en ce que** le robot preneur (4) prend et forme des piles de transfert personnalisées (7) et les place dans des rangées (8) de piles de transfert en connexion opérationnelle avec le système (5) de déplacement de rangées de piles de transfert, et le système de déplacement de rangées de piles de transfert déplace chaque rangée (8) de piles de transfert formée vers l'avant, en formant ainsi des entités de transfert (14), chacune formée de plusieurs rangées de piles de transfert.

10. Procédé de manutention d'unités de marchandises selon la revendication 9, **caractérisé en ce que** l'agencement de robot possède un système de commande (CPU) comportant au moins des informations concernant les unités de marchandises et des informations concernant la décharge du chargement orientées clients, le robot preneur (4) place des piles de transfert orientées clients (7) dans des rangées (8) de piles de transfert dans la zone d'entreposage (2) et le système (5) de déplacement de rangées de piles de transfert déplace chaque rangée (8) de piles de transfert formée de la zone d'entreposage (2) à la zone de chargement (3), en formant ainsi, à partir de plusieurs rangées de piles de transfert, des entités de transfert (14) dans la zone de chargement.

11. Procédé de manutention d'unités de marchandises selon la revendication 10, **caractérisé en ce que** le système (5) de déplacement de rangées de piles de transfert déplace la rangée (8) de piles de transfert déjà formée par le robot preneur (4), vers l'avant en direction de la zone de chargement (3) au moins suffisamment loin pour laisser de l'espace pour la rangée (8) de piles de transfert formée suivante.

12. Procédé de manutention d'unités de marchandises selon la revendication 10, **caractérisé en ce qu'**un agencement de commande (15) de la zone de formation de rangées de piles de transfert, connecté à un appareil de commande de transfert de données, appartient également au système robot, lequel agencement de commande (15) est agencé à proximité de la zone de formation (9) de rangées de piles de transfert et enregistre le mouvement d'une cible possible vers ladite zone et envoye des informations concernant ce mouvement au système de commande (CPU) de l'agencement de robot.
